# EUROPÄISCHE PATENTSCHRIFT

(11) **EP 3 332 466 B1**
(45) Veröffentlichungstag und Bekanntmachung des Hinweises auf die Patenterteilung: **11.11.2020**
(21) Anmeldenummer: 16754451.9
(22) Anmeldetag: 06.08.2016
(51) Int. Cl.: H02J 3/38, H02M 7/5387, H02M 1/44

(54) **POLWENDER UND BLINDLEISTUNGSFÄHIGER WECHSELRICHTER SOWIE POLWENDEVERFAHREN**
POLARITY REVERSER, INVERTER HAVING REACTIVE-POWER CAPABILITY, AND POLARITY REVERSING METHOD
ONDULEUR INVERSEUR DE POLARITÉ ET AVEC CAPACITÉ DE PUISSANCE RÉACTIVE AINSI QUE PROCÉDÉ D'INVERSION DE POLARITÉ

(30) Priorität: 07.08.2015 DE 202015104157 U
(43) Veröffentlichungstag der Anmeldung: 13.06.2018
(73) Patentinhaber: SMA Solar Technology AG, 34266 Niestetal (DE)
(72) Erfinder: FRIEBE, Jens, 34246 Vellmar (DE); LAHNOR, Peter, 34132 Kassel (DE); PRIOR, Oliver, 34431 Marsberg (DE)
(86) Internationale Anmeldenummer: PCT/EP2016/068827
(87) Internationale Veröffentlichungsnummer: WO 2017/025490

(56) Entgegenhaltungen:
- EP-A1- 2 755 315
- WO-A1-2011/012171
- CN-A- 103 208 935
- DE-A1- 19 535 552
- DE-A1-102011 017 601
- DE-A1-102014 101 571
- DE-A1-102015 113 632
- DE-B3-102014 102 000
- DE-B3-102014 102 000
- US-A1- 2011 273 916
- : M Davies ET AL: "HVDC PLUS - Basics and Principle of Operation Table of Contents", , 10. August 2008 (2008-08-10), XP055115193, Gefunden im Internet: URL:http://www.energy.siemens.com/mx/pool/ hq/power-transmission/HVDC/HVDC_Plus_Basic and Principals.pdf [gefunden am 2014-04-24]
- DAVIDSON C C ET AL: "Innovative concepts for hybrid Multi-Level converters for HVDC power transmission", INTERNATIONAL CONFERENCE ON AC AND DC POWER TRANSMISSION.(ACDC 2010), XX, XX, 19. Oktober 2010 (2010-10-19), Seiten 1-5, XP002675729, DOI: 10.1049/CP.2010.0982 ISBN: 978-1-84919-308-5

## Beschreibung

### TECHNISCHES GEBIET DER ERFINDUNG

Die Erfindung betrifft einen Polwender mit den Merkmalen des Oberbegriffs des unabhängigen Patentanspruchs 1, einen Wechselrichter mit einem solchen Polwender sowie ein Polwendeverfahren mit den Merkmalen des Oberbegriffs des unabhängigen Patentanspruchs 12.

### STAND DER TECHNIK

Aus der DE 10 2014 102 000 B3 ist ein Verfahren zum Betreiben eines blindleistungsfähigen Wechselrichters bekannt, das ein Polwendeverfahren umfasst. Der unter Anwendung des bekannten Polwendeverfahrens betriebene blindleistungsfähige Wechselrichter weist einen bidirektionalen DC/DC-Wandler, einen Spannungszwischenkreis und einen Polwender auf, wobei die beiden Pole des Spannungszwischenkreises mittels des Polwenders wechselweise mit zwei Anschlüssen eines Wechselstromausgangs verbindbar sind, um die Polarität des Wechselstromausgangs gegenüber dem Spannungszwischenkreis zu wechseln. Dieser Wechsel erfolgt beim Nulldurchgang einer an dem Wechselstromausgang anliegenden Wechselspannung. Bei einer Phasenverschiebung zwischen Wechselstrom und Wechselspannung an dem Wechselstromausgang wird zusätzlich die Richtung eines über den Spannungszwischenkreis fließenden Stroms umgekehrt, wenn mit dem Polwender zwischen den Halbwellen der Wechselspannung die Polarität des Wechselstromausgangs gegenüber dem Spannungszwischenkreis gewechselt wird. Wenn der Wechselstrom der Wechselspannung an dem Wechselstromausgang nacheilt, wird der Wechselstromausgang während des Umkehrens der Richtung des über den Spannungszwischenkreis fließenden Stroms von dem Spannungszwischenkreis getrennt und ein Freilaufpfad zwischen den beiden Anschlüssen des Wechselstromausgangs bereitgestellt. Dazu werden die beiden Anschlüsse des Wechselstromausgangs insbesondere über Brückenschalter des Polwenders kurzgeschlossen. Um die Richtung des über den Spannungszwischenkreis fließenden Stroms umzukehren, wird der Spannungszwischenkreis mit einem durch eine Speicherdrosseleinrichtung des DC/DC-Wandlers fließenden Strom aufgeladen und nach dem Abklingen dieses Stroms in entgegengesetzter Richtung entladen. Bei der Wechselspannung an dem Wechselstromausgang voreilendem Wechselstrom sind diese Maßnahmen beim Wechsel der Polarität des Wechselstromausgangs gegenüber dem Spannungszwischenkreis ergriffenen Maßnahmen nicht notwendig, weil hierfür eine an dem Spannungszwischenkreis anliegende Gleichspannung als treibende Kraft wirkt.

Das aus der DE 10 2014 102 000 B3 bekannte Verfahren vermeidet zwar den hohen Klirrfaktor, der mit anderen Verfahren zum Betreiben eines blindleistungsfähigen Wechselrichters mit einem DC/DC-Wandler, einem Spannungszwischenkreis und einem Polwender verbunden ist, es bedarf aber eines bidirektionalen DC/DC-Wandlers sowie einer genauen Abstimmung des Zwischenkreises und der Speicherdrosseleinrichtung des DC/DC-Wandlers aufeinander. So können auch nicht mehrere DC/DC-Wandler parallel an den Gleichspannungszwischenkreis angeschlossen werden, um beispielsweise die elektrische Leistung mehrerer mit dem jeweiligen DC/DC-Wandler in ihrem optimierten Arbeitspunkt betriebener Photovoltaikgeneratoren über einen gemeinsamen Polwender in ein Wechselstromnetz einzuspeisen.

Aus der CN 103208935 A ist ein Verfahren zum Betreiben eines blindleistungsfähigen Wechselrichters bekannt, das ein Polwendeverfahren mit den Merkmalen des Oberbegriffs des unabhängigen Patentanspruchs 12 umfasst. Der unter Anwendung des bekannten Polwendeverfahrens betriebene blindleistungsfähige Wechselrichter weist einen bidirektionalen DC/DC-Wandler, einen Spannungszwischenkreis und einen Polwender auf, wobei die beiden Pole des Spannungszwischenkreises mittels des Polwenders wechselweise mit zwei Anschlüssen eines Wechselstromausgangs verbindbar sind, um die Polarität des Wechselstromausgangs gegenüber dem Spannungszwischenkreis zu wechseln. Dieser Wechsel erfolgt beim Nulldurchgang eines über den Wechselstromausgang fließenden Wechselstroms. Der DC/DC-Wandler umfasst einen an eine Gleichspannungsquelle angeschlossenen Tiefsetzsteller und einen dazu in Gegenrichtung wirksamen Hochsetzsteller. Der Tiefsetzstellerschalter, die Hochsetzstellerdiode und eine von beiden Stellern genutzte Drossel sind jeweils auf zwei Bauteile aufgeteilt, so dass sich eine symmetrische Anordnung ergibt. Der Hochsetzsteller ist dabei über die auf zwei Dioden aufgeteilte Hochsetzstellerdiode mit gegenüber dem Tiefsetzsteller umgekehrter Polarität an die Gleichspannungsquelle angeschlossen. Bei gleichen Vorzeichen des Wechselstroms und der Wechselspannung an dem Wechselstromausgang ist der Tiefsetzsteller des DC/DC-Wandlers aktiv. Wenn jedoch die Wechselspannung ihren Nulldurchgang vor dem Nulldurchgang des Wechselstroms hat, wird statt des Tiefsetzstellers der Hochsetzsteller des DC/DC-Wandlers aktiviert. Dann ist der Zwischenkreis mit der Gleichspannungsquelle über den Hochsetzsteller verbunden, wobei die Polarität gegenüber der Verbindung des Zwischenkreises mit der Gleichspannungsquelle über den Tiefsetzsteller vertauscht ist.

Aus der Druckschrift DE 10 2014 101 571 A1 ist ein blindleistungsfähiger Wechselrichter zur Einspeisung von elektrischer Leistung einer Gleichstromquelle in ein Wechselspannungsnetz bekannt, der einen Polwender mit zwei parallelen Halbbrückenzweigen als Wechselrichterbrücke aufweist, wobei die Verbindung von Ausgangsanschlüssen des Polwenders mit Eingangsanschlüssen des Polwenders beim Nulldurchgang der Netzspannung gewechselt wird. Während einer Einspeisung von Blindleistung in Zeitabschnitten einer Netzperiode des Wechselspannungsnetzes, in denen der Wechselrichter Leistung aus dem Wechselspannungsnetz bezieht, wird ein Schalter der Wechselrichterbrücke derart betrieben, dass die aus dem Wechselspannungsnetz bezogene elektrische Leistung in Wärme umgewandelt wird, indem dieser Schalter in einen linearen Betriebsmodus versetzt wird oder dissipativ getaktet wird. In einer Ausführungsform wird hierzu einer der zum Verbinden der Ausgangsanschlüsse des Polwenders mit den Eingangsanschlüssen des Polwenders vorgesehenen Schalter der Halbbrückenzweige verwendet; in einer weiteren Ausführungsform ist hierfür ein zusätzlicher Schalter vorgesehen, der parallel zu den Halbbrückenzweigen zwischen den Eingangsanschlüssen des Polwenders angeordnet ist.

DE19535552 offenbart einen Umrichter, welcher ebenfalls einen Strompfad mit einer Vollbrüche und einem Gegenspannungskompensator zwischen den gleichstromseitigen Anschlüssen und zu den Anschlüssen zum einem AC Netz hat.

### AUFGABE DER ERFINDUNG

Der Erfindung liegt die Aufgabe zugrunde, einen blindleistungsfähigen Polwender, einen Wechselrichter und ein Polwendeverfahren bereitzustellen, mit denen eine Blindleistungsfähigkeit ohne Erhöhung des Klirrfaktors und ohne besondere Anforderungen an davor angeordnete Schaltungen und ohne Abstimmung des Polwenders auf davor liegende Schaltungen erreicht wird.

### LÖSUNG

Die Aufgabe der Erfindung wird durch einen blindleistungsfähigen Polwender mit den Merkmalen des unabhängigen Patentanspruchs 1, einen Wechselrichter nach den nebengeordneten Patentansprüchen 9 oder 10 und ein Polwendeverfahren mit den Merkmalen des unabhängigen Patentanspruchs 12 gelöst. Die abhängigen Patentansprüche betreffen bevorzugte Ausführungsformen des erfindungsgemäßen Polwenders, des erfindungsgemäßen Wechselrichters und des erfindungsgemäßen Polwendeverfahrens.

### BESCHREIBUNG DER ERFINDUNG

Bei einem erfindungsgemäßen Polwender mit einer Halbbrücke mit einem ersten Eingangsanschluss, einem zweiten Eingangsanschluss, und einem Ausgangsanschluss, die einen zwischen den ersten Eingangsanschluss und den Ausgangsanschluss geschalteten ersten Brückenschalter und einen zwischen den zweiten Eingangsanschluss und den Ausgangsanschluss geschalteten zweiten Brückenschalter aufweist, sowie einer weiteren Halbbrücke, die einen zwischen den ersten Eingangsanschluss und einen weiteren Ausgangsanschluss geschalteten ersten weiteren Brückenschalter und einen zwischen den zweiten Eingangsanschluss und den weiteren Ausgangsanschluss geschalteten zweiten weiteren Brückenschalter aufweist, und einer Schalteransteuerung zur Ansteuerung der Brückenschalter, die derart ausgebildet ist, dass eine Verbindung der Ausgangsanschlüsse mit den Eingangsanschlüssen über die Brückenschalter beim Nulldurchgang eines an den Ausgangsanschlüssen fließenden Wechselstroms gewechselt wird, ist in einem Strompfad zwischen den Eingangsanschlüssen über den ersten Brückenschalter, die Ausgangsanschlüsse und den zweiten weiteren Brückenschalter sowie in einem Strompfad zwischen den Eingangsanschlüssen über den ersten weiteren Brückenschalter, die Ausgangsanschlüsse und den zweiten Brückenschalter mindestens ein Gegenspannungskompensator angeordnet.

Der Gegenspannungskompensator ist dazu ausgebildet, dass er das elektrische Potential des jeweiligen Eingangsanschlusses gegenüber dem jeweiligen Ausgangsanschluss, zwischen denen der Gegenspannungskompensator angeordnet ist, um eine über dem Gegenspannungskompensator abfallende Kompensationsspannung verschiebt und dadurch eine dem Stromfluss in dem Strompfad, in dem der Gegenspannungskompensator angeordnet ist, entgegengerichtete Gegenspannung zwischen dem jeweiligen Ausgangsanschluss und dem jeweiligen Eingangsanschluss kompensiert. Der Gegenspannungskompensator ermöglicht damit insbesondere die Ausgabe von Blindleistung über den erfindungsgemäßen Polwender, ohne dass es irgendeiner dem Polwender vorgeschalteten bidirektionalen oder direkt blindleistungsfähigen Schaltung oder einer hochfrequenten Ansteuerung der Brückenschalter der Halbbrücken bedarf. Der Gegenspannungskompensator verschiebt das Potential des jeweiligen Eingangsanschlusses dabei selektiv nur in Zeiträumen, in denen eine dem Stromfluss entgegengerichtete Gegenspannung vorliegt, das heißt, in Zeiträumen unterschiedlichen Vorzeichens von Wechselstrom und Wechselspannung zwischen den Ausgangsanschlüssen.

In einer Ausführungsform ist der Gegenspannungskompensator in Reihe mit einem der Brückenschalter geschaltet. Dabei kann der Gegenspannungskompensator zwischen dem Brückenschalter und dem jeweiligen Ausgangsanschluss angeordnet sein; er kann aber auch ebensogut zwischen dem Brückenschalter und dem jeweiligen Eingangsanschluss angeordnet sein.

Bei Anordnung des Gegenspannungskompensators zwischen einem der Brückenschalter und dem jeweiligen Ausgangsanschluss liegt dieser gleichzeitig in beiden Strompfaden, so dass prinzipiell ein gemeinsam genutzter Gegenspannungskompensator für beide Strompfade ausreichend ist. Bei Anordnung des Gegenspannungskompensators zwischen dem Brückenschalter und dem jeweiligen Eingangsanschluss ist hingegen grundsätzlich für jeden der beiden Strompfade jeweils ein eigener Gegenspannungskompensator vorzusehen.

Der Gegenspannungskompensator kann als variable Impedanz ausgebildet sein. Eine solche variable Impedanz lässt sich beispielsweise durch einen Halbleiterschalter im Linearbetrieb oder als Transistor, der auf einen über ihm auftretenden Spannungsabfall in Höhe der Kompensationsspannung angesteuert wird, realisieren. Bei dieser Ausführungsform ist es im Hinblick auf eine Ansteuerung des Halbleiterschalters bzw. des Transistors vorteilhaft, in jedem der Strompfade einen Gegenspannungskompensator vorzusehen, jeweils einen zwischen dem ersten bzw. zweiten Brückenschalter und dem Ausgangsanschluss und einen zwischen dem ersten weiteren bzw. zweiten weiteren Brückenschalter und dem weiteren Ausgangsanschluss. Im Hinblick auf eine Verwendung insgesamt möglichst weniger Schalter ist es vorteilhaft, wenn der Halbleiterschalter einen der Brückenschalter umfasst.

In einer weiteren Ausführungsform umfasst der Gegenspannungskompensator eine Reihenschaltung aus einem ohmschen Widerstand oder einer Drossel und einem Aktivierungsschalter, sowie einen der Reihenschaltung parallel geschalteten zusätzlichen Schalter. Der Gegenspannungskompensator kann damit selektiv beim Vorliegen einer Gegenspannung durch Öffnen des zusätzlichen Schalters und Schließen des Aktivierungsschalters aktiviert werden. Bei dieser Ausführungsform ist in der Regel ein einziger Gegenspannungskompensator zwischen einem der Brückenschalter und dem jeweiligen Ausgangsanschluss ausreichend, der dann in beiden Strompfaden liegt. Im Falle eines ohmschen Widerstands zum Abfallenlassen der Gegenspannung fallen allerdings auch erhebliche Verlustleistungen an; und bei einer Drossel ist darauf zu achten, dass sie den Stromfluss nicht über das gewünschte Maß hinaus beeinflusst. Im Hinblick auf eine Verwendung insgesamt möglichst weniger Schalter ist es bei dieser Ausführungsform vorteilhaft, wenn der zusätzliche Schalter einen der Brückenschalter umfasst.

Der Gegenspannungskompensator kann in einer weiteren Ausführungsform auch eine Reihenschaltung aus einem auf die Kompensationsspannung aufladbaren Kondensator und einem Aktivierungsschalter mit einem der Reihenschaltung parallel geschalteten zusätzlichen Schalter umfassen. Auch bei dieser Ausführungsform erfolgt eine selektive Aktivierung beim Vorliegen einer Gegenspannung durch Öffnen des zusätzlichen Schalters und Schließen des Aktivierungsschalters. Bei Verwendung nur eines Gegenspannungskompensators mit nur einem Kondensator gemeinsam für beide Strompfade müsste dieser je nach Polarität der vorliegenden Gegenspannung umgeladen werden. Daher ist es bei dieser Ausführungsform vorteilhaft, in jedem der Strompfade einen Gegenspannungskompensator vorzusehen. Im Hinblick auf eine Verwendung insgesamt möglichst weniger Schalter ist es auch hier wieder vorteilhaft, wenn der zusätzliche Schalter einen der Brückenschalter umfasst.

Bei Ausbildung des Aktivierungsschalters als Halbleiterschalter mit inhärenter antiparalleler Diode oder Bodydiode ist der Kondensator des Gegenspannungskompensators weiterhin mit einer Entladungssperrdiode in Reihe zu schalten, die seine Entladung und damit den Abfall seiner Kompensationsspannung verhindert. Bei in geöffnetem Zustand bidirektional sperrendem Aktivierungsschalter ist eine solche Entladungssperrdiode nicht erforderlich.

Auf die Kompensationsspannung aufgeladen werden kann der Kondensator durch Schließen des Aktivierungsschalters. Dies bedeutet auch, dass sich der Kondensator weiter auflädt, wenn der Gegenspannungskompensator zum Einsatz kommt. Entsprechend wird für den Kondensator des Gegenspannungskompensators sinnvollerweise eine Entladeschaltung vorgesehen, die diese zusätzliche Aufladung des Kondensators regelmäßig wieder beseitigt. Zwar kann das Entladen des Kondensators grundsätzlich auch über einen Entladungswiderstand erfolgen, bevorzugt ist es jedoch, den Kondensator unter Aufladung irgendeines nutzbaren Zwischenkreises zu entladen. Dies kann zum Beispiel ein auf der Eingangsseite des Polwenders liegender Zwischenkreis oder ein Zwischenkreis eines Bordnetzes des Polwenders sein.

Die Entladeschaltung kann zum Entladen des Kondensators konkret einen einfachen Sperrwandler aufweisen.

Die Entladeschaltung kann so ausgebildet sein, dass sie regelmäßig bei geöffnetem Aktivierungsschalter einen vorgegebenen Grundwert der Kompensationsspannung einstellt. Dabei bedeutet, dass die Entladeschaltung regelmäßig den vorgegebenen Grundwert der Kompensationsspannung einstellt, nicht, dass sie dies zwingend jedes Mal dann tut, wenn der Aktivierungsschalter geöffnet ist. Vielmehr kann das Einstellen auch in größeren Abständen erfolgen. Der vorgegebene Grundwert der Kompensationsspannung ist zwar für gleichbleibende Betriebsbedingungen des Polwenders und damit insbesondere für gleichbleibende maximale Gegenspannungen fest und beispielsweise mindestens genauso groß wie diese auftretenden Gegenspannungen, hieraus zeichnet sich aber ab, dass bei variierenden Gegenspannungen der vorgegebene Grundwert der Kompensationsspannung den Variationen der Gegenspannung nachgeführt werden kann und sinnvollerweise auch nachgeführt wird.

In einer konkreten Ausführungsform kann der Gegenspannungskompensator beispielsweise einen auf eine erste Kompensationsspannung aufladbaren ersten Kondensator, der mit einem ersten Aktivierungsschalter zwischen den ersten Eingangsanschluss und den Ausgangsanschluss geschaltet ist, und einen auf eine zweite Kompensationsspannung aufladbaren zweiten Kondensator, der mit einem zweiten Aktivierungsschalter zwischen den zweiten Eingangsanschluss und den Ausgangsanschluss geschaltet ist, umfassen. Der erste und zweite Brückenschalter bilden hierbei die zusätzlichen Schalter, die beim Aktivieren des Gegenspannungskompensators, das heißt beim Schließen des jeweiligen Aktivierungsschalters, geöffnet werden. Die Entladeschaltung kann bei dieser Ausführungsform zwei separate Entladeschaltungen aufweisen, die jeweils einem der beiden Kondensatoren zugeordnet sind.

Wenn der erste Kondensator und der zweite Kondensator von dem Ausgangsanschluss aus gesehen vor dem jeweiligen Bauteil angeordnet sind, das seine Entladung bei geöffnetem Aktivierungsschalter verhindert, kann die Entladeschaltung von dem Ausgangsanschluss aus gesehen einen ersten Eingangsanschluss hinter dem ersten Kondensator und einen zweiten Eingangsanschluss hinter dem zweiten Kondensator aufweisen; sie kommt dann also insgesamt mit zwei Eingangsanschlüssen aus, zwischen denen die beiden Kondensatoren in Reihe geschaltet sind und über die die beiden Kondensatoren wie ein einziger entladen werden können. Es versteht sich, dass die Eingangsanschlüsse der Entladeschaltung vor dem jeweiligen Bauteil angeordnet werden müssen, das eine Entladung des jeweiligen Kondensators bei geöffnetem Aktivierungsschalter verhindert. Dieses Bauteil ist der jeweilige Aktivierungsschalter selbst, wenn er bidirektional sperrt, bzw. die jeweilige Entladungssperrdiode. Wenn der jeweilige Aktivierungsschalter nicht bidirektional sperrt, kann er auf beliebiger Seite des jeweiligen Kondensators und des jeweiligen Eingangsanschlusses der Entladeschaltung angeordnet sein.

Eine Schalteransteuerung für die zuletzt beschriebene Ausführungsform des Polwenders ist vorzugsweise so ausgebildet, dass sie jeweils denjenigen der Brückenschalter und denjenigen der Aktivierungsschalter, die zwischen dem Ausgangsanschluss und demselben der Eingangsanschlüsse angeordnet sind, komplementär zueinander schließt. Dies bedeutet, dass sie zu jedem Zeitpunkt maximal einen dieser beiden Schalter schließt; es kann auch Zeitpunkte geben, zu denen beide Schalter, die zwischen dem Ausgangsanschluss und demselben der Eingangsanschlüsse angeordnet sind, geöffnet sind. Wie bereits angedeutet wurde, sind die Brückenschalter des erfindungsgemäßen Polwenders nicht unbedingt für ein höherfrequentes Takten vorgesehen. In jedem Fall können sie für vergleichsweise kurze Teilzeiträume auch gleichzeitig geschlossen werden, zum Beispiel kann also der jeweilige Brückenschalter überlappend mit dem Öffnen des zugehörigen Aktivierungsschalters geschlossen wird und umgekehrt.

In einer weiteren Ausführungsform umfasst der Gegenspannungskompensator eine Vollbrückenschaltung, an deren Eingangsanschlüssen ein Kondensator angeschlossen ist und an deren Ausgangsanschlüssen die Kompensationsspannung bereitgestellt wird. Die Vollbrückenschaltung wird dazu als ein Polwender betrieben, wodurch die an dem Kondensator anliegende Spannung mit wechselnder Polarität an die Anschlüsse des Gegenspannungskompensators angelegt werden kann. Bei dieser Ausführungsform ist ein einziger Gegenspannungskompensator zwischen einem der Brückenschalter und dem jeweiligen Ausgangsanschluss ausreichend, der dann in beiden Strompfaden liegt.

Mit dem erfindungsgemäßen Polwender kann Blindleistung in ein Wechselstromnetz eingespeist werden, ohne dass es hierzu einer bidirektionalen oder ihrerseits blindleistungsfähigen Schaltung auf der Eingangsseite des Polwenders bedarf. Entsprechend kann der erfindungsgemäße Polwender ausgangsseitiger Teil eines blindleistungsfähigen Wechselrichters sein. Bei einem solchen erfindungsgemäßen Wechselrichter kann ein eingangsseitiger DC/DC-Wandler zur Formung eines in sinusförmigen Halbwellen pulsierenden Gleichstroms vorgesehen sein, der über den Polwender als Wechselstrom ausgegeben wird. Dabei kann der mindestens eine eingangsseitige DC/DC-Wandler ein Einquadrantensteller sein, der also seinen Gleichstrom über einen Gleichspannungszwischenkreis ausgibt, so dass der Gleichstrom und die Spannung des Gleichspannungszwischenkreises immer gleiches Vorzeichen haben. Die erfindungsgemäße Kompensation der Gegenspannung oder Potentialverschiebung zwischen den Ausgangsanschlüssen und den Eingangsanschlüssen erlaubt es dennoch, elektrische Energie über den Polwender in ein Wechselstromnetz einzuspeisen, in dem eine Phasenverschiebung zwischen Wechselstrom und Wechselspannung auftritt, so dass Wechselstrom und Wechselspannung vorübergehend entgegengesetzte Vorzeichen haben. In den Zeiträumen dieser entgegengesetzten Vorzeichen wird mit der Gegenspannungskompensation die dem Wechselstrom entgegengesetzte Wechselspannung zu dem Eingang des Polwenders hin ausgeglichen oder anders gesagt das Potential des Eingangs des Polwenders gegenüber seinem Ausgang so verschoben, dass aus der Sicht des Eingangs der Gleichstrom immer in die durch die am Eingang anliegende Gleichspannung vorgegebene Richtung fließt, auch wenn Wechselstrom und Wechselspannung am Ausgang unterschiedliche Vorzeichen haben.

Bei dem erfindungsgemäßen Wechselrichter können eingangsseitig mehrere DC/DC-Wandler mit ihren jeweiligen Ausgängen an einen gemeinsamen Gleichspannungszwischenkreis angeschlossen sein. Über diesen gemeinsamen Gleichspannungszwischenkreis geben die mehreren DC/DC-Wandler gemeinsam den in Halbwellen pulsierenden Gleichstrom an den Polwender aus, der dann von dem Polwender mit halbwellenweise wechselnder Polarität zu dem gewünschten Wechselstrom zusammengesetzt wird. Der Gegenspannungskompensator bei dem erfindungsgemäßen Polwender muss daher nur einmal für alle angeschlossenen DC/DC-Wandler gemeinsam vorgesehen werden. Die eingangsseitigen DC/DC-Wandler müssen allerdings so aufeinander abgestimmt werden, dass sie synchron arbeiten, d. h. ihren pulsierenden Gleichstrom in zeitgleich mit den Nulldurchgängen eines auszugebenden Wechselstroms beginnenden und endenden Halbwellen ausgeben. Dies ist aber sowieso Grundvoraussetzung für die Einspeisung des Wechselstroms in ein Wechselstromnetz.

An jeden der eingangsseitigen DC/DC-Wandler des erfindungsgemäßen Wechselrichters kann ein separater Photovoltaikgenerator angeschlossen sein, dessen Arbeitspunkt durch den jeweiligen DC/DC-Wandler vorgegeben wird. Damit kann der jeweilige DC/DC-Wandler neben der Stromformung auch zu einem MPP-Tracking, d. h. einer Leistungsoptimierung des jeweiligen Photovoltaikgenerators genutzt werden.

Eine Schalteransteuerung des erfindungsgemäßen Wechselrichters ist, wie dies bereits angedeutet wurde, vorzugsweise so ausgebildet, dass sie die Verbindung der beiden Ausgangsanschlüsse des Polwenders mit den beiden Eingangsanschlüssen bei jedem Nulldurchgang des zwischen den Ausgangsanschlüssen fließenden Wechselstroms wechselt und dass sie in Zeiträumen, in denen eine Wechselspannung an dem Ausgangsanschluss ein anderes Vorzeichen als der Wechselstrom hat, den Aktivierungsschalter statt des zusätzlichen Schalters des Gegenspannungskompensators schließt oder die variable Impedanz auf einen über ihr auftretenden Spannungsabfall in Höhe der Kompensationsspannung ansteuert. Damit wird in den Zeiträumen unterschiedlichen Vorzeichens von Wechselstrom und Wechselspannung zwischen den Ausgangsanschlüssen die Potentialverschiebung mittels des Gegenspannungskompensators aktiviert.

Bei einem erfindungsgemäßen Polwendeverfahren zum wechselweisen Verbinden von zwei Polen eines Gleichspannungszwischenkreises mit Ausgangsanschlüssen eines Wechselstromausgangs, an dem eine Wechselspannung anliegt, um über den Wechselstromausgang einen Wechselstrom mit einer Phasenverschiebung zu der Wechselspannung auszugeben, wird die Verbindung der Ausgangsanschlüsse des Wechselstromausgangs mit den Polen des Gleichspannungszwischenkreises beim Nulldurchgang des Wechselstroms gewechselt und wird der Wechselstromausgang bei gleichen Vorzeichen des Wechselstroms und der Wechselspannung direkt mit dem Gleichspannungszwischenkreis verbunden, während er bei einander entgegengesetzten Vorzeichen des Wechselstroms und der Wechselspannung über einen Gegenspannungskompensator mit dem Gleichspannungszwischenkreis verbunden wird. Dabei verschiebt der Gegenspannungskompensator das elektrische Potential des Pols des Gleichspannungszwischenkreises gegenüber dem Ausgangsanschluss, mit dem der Pol über den Gegenspannungskompensator verbunden ist, um eine über ihm abfallende Kompensationsspannung. Mit Hilfe dieses Verfahrens kann Blindleistung an dem Wechselstromausgang ausgegeben werden, obwohl über den Gleichspannungszwischenkreis ein Gleichstrom fließt und an dem Gleichspannungszwischenkreis eine Gleichspannung anliegt, d. h. Gleichstrom und Gleichspannung hier immer gleiche oder zumindest keine unterschiedlichen Vorzeichen aufweisen.

Der Gegenspannungskompensator kann insbesondere so angeordnet und ausgebildet sein, wie es im Zusammenhang mit dem erfindungsgemäßen Polwender beschrieben wurde. Für das erfindungsgemäße Polwendeverfahren kommt es jedoch nur darauf an, dass der Wechselstromausgang selektiv bei einander entgegengesetzten Vorzeichen des Wechselstroms und der Wechselspannung über den Gegenspannungskompensator mit dem Gleichspannungszwischenkreis verbunden wird. Der Gegenspannungskompensator kann dazu auf beliebige Weise in der Verbindung zwischen dem Wechselstromausgang und dem Gleichspannungszwischenkreis ausgebildet werden, beispielsweise auch durch einen nur teilweise geschlossenen Brückenschalter oder ein in Reihe mit einem Brückenschalter oder einem Ausgangsanschluss geschaltetes, zusätzliches und bei einander entgegengesetzten Vorzeichen des Wechselstroms und der Wechselspannung nur teilweise geöffnetes Stromventil. Ein solcher teilweise geschlossener Brückenschalter kann ein Halbleiterschalter im Linearbetrieb sein. Ein solches nur teilweise geöffnetes Stromventil kann ein normalerweise leitender Transistor sein, der auf einen gewünschten Spannungsabfall angesteuert wird und somit eine variable Impedanz ausbildet. Eine solche variable Impedanz kann dann auf einen über ihr auftretenden Spannungsabfall in Höhe einer Kompensationsspannung angesteuert werden. Dabei kann der über dem Gegenspannungskompensator auftretende Spannungsabfall in Höhe der Kompensationsspannung auch adaptiv an eine zwischen einem der Pole des Gleichspannungszwischenkreises und einem der Ausgangsanschlüsse anliegende Gegenspannung angepasst werden.

Für die Gegenspannungskompensation kann auch ein Kondensator des Gegenspannungskompensators auf eine Kompensationsspannung geladen werden. Insbesondere kann ein erster Kondensator des Gegenspannungskompensators auf eine erste Kompensationsspannung zwischen dem einen Pol des Gleichspannungszwischenkreises und einem der Ausgangsanschlüsse des Wechselstromausgangs und ein zweiter Kondensator des Gegenspannungskompensators auf eine zweite Kompensationsspannung zwischen dem anderen Pol des Gleichspannungszwischenkreises und dem einen der Ausgangsanschlüsse des Wechselstromausgangs geladen werden. Die Aufladung der beiden Kondensatoren erfolgt durch den von dem Gleichspannungszwischenkreis zu dem Wechselstromausgang über den Kondensator fließenden Strom. Dies bedeutet zugleich, dass die Aufladung des Kondensators fortgesetzt wird, wenn der Gegenspannungskompensator zum Einsatz kommt. Das heißt, die über dem jeweiligen Kondensator anliegende Spannung wächst grundsätzlich an, bis die Spannung über beiden Kondensatoren die maximale Spannung des Gleichspannungszwischenkreises erreicht. Für die Gegenspannungskompensation reicht aber eine Kompensationsspannung über jedem der Kondensatoren aus, die gleich der maximalen Wechselspannung mit entgegengesetztem Vorzeichen zu dem Wechselstrom ist, welche an dem Wechselstromausgang auftritt. Eine darüber hinausgehende Kompensationsspannung würde unnötige Potentialsprünge des Gleichspannungszwischenkreises gegenüber dem Wechselstromausgang bei Aktivierung des Gegenspannungskompensators verursachen. Daher ist es sinnvoll, dass die Kondensatoren regelmäßig wieder auf einen vorgegebenen Grundwert der ersten und der zweiten Kompensationsspannung entladen werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten relativen Anordnungen mehrerer Bauteile zueinander sowie deren Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt verschiede Ausführungsformen von erfindungsgemäßen Polwendern.
- **Fig. 2**: zeigt verschieden Ausführungsformen von Gegenspannungskompensatoren.
- **Fig. 3**: zeigt eine Ausführungsform eines erfindungsgemäßen Polwenders.
- **Fig. 4**: zeigt einen erfindungsgemäßen Wechselrichter.
- **Fig. 5**: zeigt den Verlauf eines Wechselstroms und einer Wechselspannung an einem Wechselstromausgang eines erfindungsgemäßen Wechselrichters.
- **Fig. 6**: zeigt den Verlauf eines pulsierenden Gleichstroms über und den Verlauf einer Gleichspannung an einem Gleichspannungszwischenkreis eines erfindungsgemäßen Wechselrichters.
- **Fig. 7**: zeigt den Verlauf eines pulsierenden Gleichstroms über und den Verlauf einer Gleichspannung an einem Gleichspannungszwischenkreis eines erfindungsgemäßen Wechselrichters mit adaptiv angepasster Kompensationsspannung.
- **Fig. 8**: illustriert die Ansteuerung von Schaltern eines Polwenders eines erfindungsgemäßen Wechselrichters; und
- **Fig. 9**: illustriert eine Ausführungsform einer Entladeschaltung eines erfindungsgemäßen Polwenders oder eines erfindungsgemäßen Wechselrichters.

### FIGURENBESCHREIBUNG

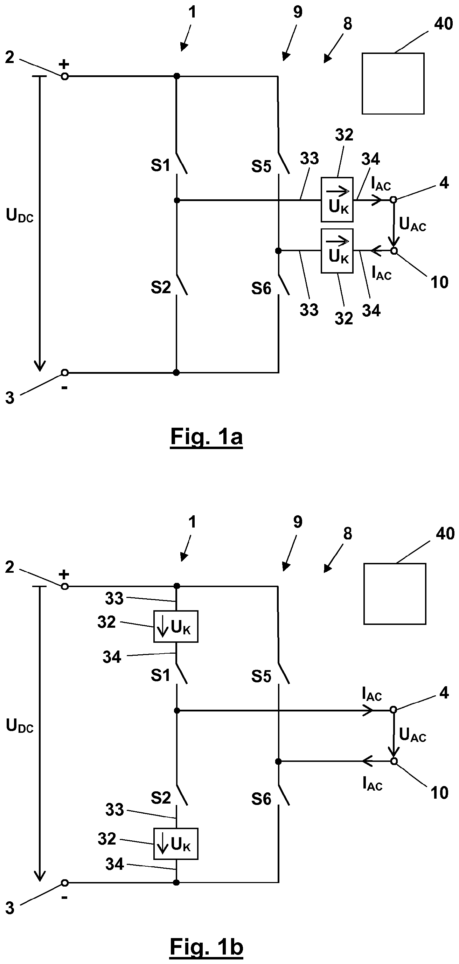

Bei dem in **Fig. 1a****-d** dargestellten Polwender 8 ist eine Halbbrücke 1 zwischen zwei Eingangsanschlüssen 2 und 3, zwischen denen eine Gleichspannung U_{DC} anliegt, angeordnet, Die Halbbrücke 1 weist zwischen dem Eingangsanschluss 2 und einem Ausgangsanschluss 4 einen ersten Brückenschalter S1 und zwischen dem Eingangsanschluss 3 und dem Ausgangsanschluss 4 einen zweiten Brückenschalter S2 auf und verbindet die Eingangsanschlüsse 2 und 3 wechselweise mit dem Ausgangsanschluss 4. Neben der Halbbrücke 1 ist eine weitere Halbbrücke 9 zwischen den Eingangsanschlüssen 2 und 3 angeordnet, um einen weiteren Ausgangsanschluss 10 wechselweise mit den Eingangsanschlüssen 2 und 3 zu verbinden. Die weitere Halbbrücke 9 umfasst einen ersten weiteren Brückenschalter S5 zwischen dem Eingangsanschluss 2 und dem weiteren Ausgangsanschluss 10 sowie einen zweiten weiteren Brückenschalter S6 zwischen dem Eingangsanschluss 3 und dem weiteren Ausgangsanschluss 10. Zwischen dem Ausgangsanschluss 4 und dem weiteren Ausgangsanschluss 10 wird eine Wechselspannung U_{AC} ausgegeben, wobei an den Ausgangsanschlüssen 4, 10 ein Wechselstrom I_{AC} fließt.

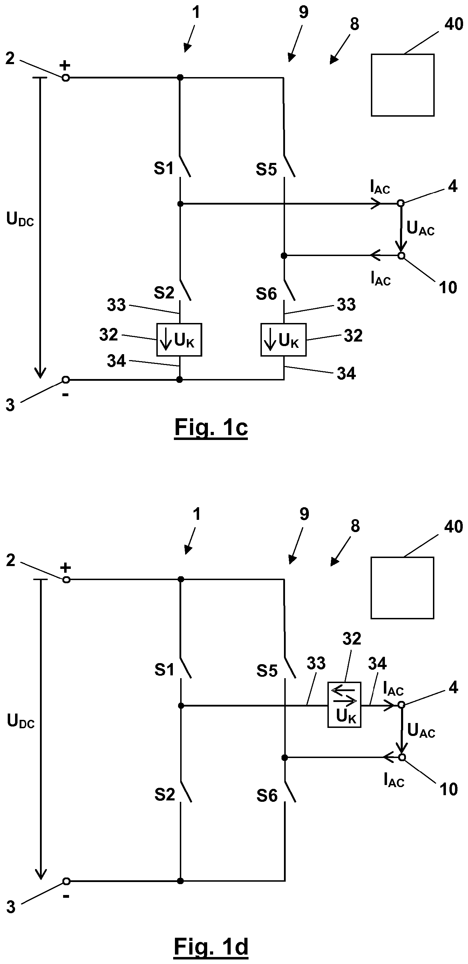

Zwischen dem ersten Eingangsanschluss 2 oder dem zweiten Eingangsanschluss 3 und dem Ausgangsanschluss 4 oder dem weiteren Ausgangsanschluss 10 sind in den Ausführungsbeispielen gemäß Fig. 1a-c jeweils zwei Gegenspannungskompensatoren 32 mit ihren Anschlüssen 33, 34 angeordnet. Für die Anordnung ergeben sich grundsätzlich mehrere Möglichkeiten. Beispielsweise kann wie in Fig. 1a jeweils ein Gegenspannungskompensator 32 zwischen den Brückenschaltern S1, S2, S5, S6 und den mit den Brückenschaltern S1, S2, S5, S6 jeweils verbundenen Ausgangsanschlüssen 4, 10 angeordnet sein. Die Gegenspannungskompensatoren können aber auch zwischen den Brückenschaltern S1, S2, S5, S6 und den Eingangsanschlüssen 2, 3 angeordnet sein, beispielsweise wie in Fig. 1b innerhalb einer Halbbrücke 1 jeweils zwischen den Brückenschaltern S1, S2 und den Eingangsanschlüssen 2, 3 oder wie in Fig. 1c jeweils in einer der Halbbrücken 1, 9 zwischen den Brückenschaltern S2, S6 und jeweils demselben Eingangsanschluss 3.

Die in Fig. 1b und Fig. 1c dargestellten Anordnungen von Gegenspannungskompensatoren 32 zwischen Brückenschaltern S1, S2, S5, S6 und Ausgangsanschlüssen 4, 10 sind hier nur beispielhaft. Ebensogut können die Gegenspannungskompensatoren 32 anstatt wie in Fig. 1b innerhalb der Halbbrücke 1 auch innerhalb der weiteren Halbbrücke 9 und anstatt wie in Fig. 1c zwischen den Brückenschaltern S2, S6 und dem Eingangsanschluss 3 auch zwischen den Brückenschaltern S1, S5 und dem Eingangsanschluss 2 angeordnet sein.

Weiterhin ist es auch möglich einen Gegenspannungskompensator 32 zwischen den Brückenschaltern S1, S2, S5, S6 und dem mit den Brückenschaltern S1, S2, S5, S6 jeweils verbundenen Ausgangsanschluss 4, 10 anzuordnen und einen weiteren Gegenspannungskompensator 32 zwischen einem der Brückenschalter S1, S2, S5, S6 und dem mit dem Brückenschalter S1, S2, S5, S6 jeweils verbundenen Eingangsanschluss 2, 3, sofern dabei sowohl in dem Strompfad zwischen den Eingangsanschlüssen 2, 3 über den Brückenschalter S1, die Ausgangsanschlüsse 4, 10 und den Brückenschalter S6 als auch in dem Strompfad zwischen den Eingangsanschlüssen 2, 3 über den Brückenschalter S5, die Ausgangsanschlüsse 4, 10 und den Brückenschalter S2 ein Gegenspannungskompensator 32 angeordnet ist.

In den Fig. 1a-c sind jeweils zwei Gegenspannungskompensatoren 32 vorgesehen. Ebensogut ist es auch möglich, wie in Fig. 1d dargestellt, nur einen Gegenspannungskompensator 32 vorzusehen, sofern dieser gleichzeitig sowohl in dem Strompfad zwischen den Eingangsanschlüssen 2, 3 über den Brückenschalter S1, die Ausgangsanschlüsse 4, 10 und den Brückenschalter S6 als auch in dem Strompfad zwischen den Eingangsanschlüssen 2, 3 über den Brückenschalter S5, die Ausgangsanschlüsse 4, 10 und den Brückenschalter S2 liegt. Es ist auch möglich, mehr als zwei Gegenspannungskompensatoren 32, beispielsweise vier oder sechs, vorzusehen, wobei sich die jeweiligen Anordnungen der Gegenspannungskompensatoren 32 zwischen Brückenschaltern S1, S2, S5, S6 und Eingangsanschlüssen 2, 3 oder Ausgangsanschlüssen 4, 10 entsprechend den Anordnungen der einzelnen Gegenspannungskompensatoren 32 in den Fig. 1a-c ergeben.

Die Brückenschalter S1, S2, S5, S6 des Polwenders 8 werden von einer Schalteransteuerung 40 so angesteuert, dass der Schalter S1 zusammen mit dem Schalter S6 oder der Schalter S2 zusammen mit dem Schalter S5 geschlossen wird. Durch einen Wechsel zwischen diesen beiden Formen der Verbindung der Ausgangsanschlüsse 4 und 10 mit den Eingangsanschlüssen 2 und 3 wird die Polarität der Eingangsanschlüsse 2 und 3 gegenüber den Ausgangsanschlüssen 4 und 10 umgekehrt. Die Gegenspannungskompensatoren 32 werden selektiv durch die Schalteransteuerung 40 aktiviert, so dass sie das elektrische Potential des jeweiligen Eingangsanschlusses 2, 3 gegenüber dem jeweiligen Ausgangsanschluss 4, 10, zwischen denen der jeweilige Gegenspannungskompensator 32 angeordnet ist, um eine über dem Gegenspannungskompensator 32 abfallende Kompensationsspannung Uₖ verschieben. Damit kann ein gegenüber einem über den Ausgangsanschluss 4 ausgegebenen Wechselstrom vorübergehend negatives Vorzeichen der Wechselspannung U_{AC} so kompensiert werden, dass ein von dem Eingangsanschluss 2 aus fließender Strom trotz des negativen Momentanwerts der Wechselspannung U_{AC} in die durch die zwischen den Eingangsanschlüssen 2 und 3 anliegende Gleichspannung U_{DC} vorgegebene Richtung fließt. So kann über den Polwender 8 Blindleistung an den Ausgangsanschlüssen 4, 10 ausgegeben werden, ohne dass sich bei dem zwischen den Eingangsanschlüssen 2 und 3 fließenden Gleichstrom und der dazwischen anliegenden Gleichspannung U_{DC} jemals einander entgegengesetzte Vorzeichen ergeben.

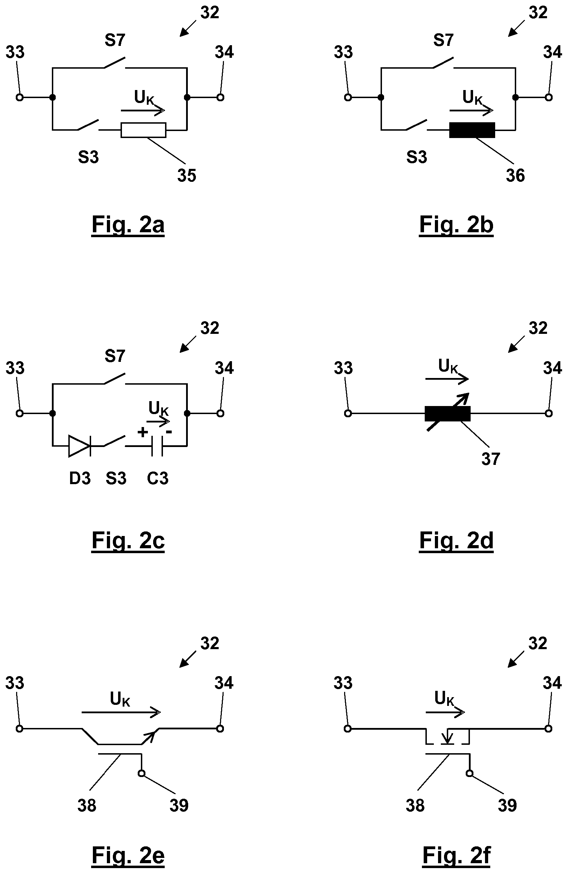

Zur Bereitstellung einer Kompensationsspannung U_{K} sind in **Fig. 2a****-g** verschiedene Ausführungsformen von Gegenspannungskompensatoren 32 dargestellt. In einer ersten Ausführungsform gemäß Fig. 2a kann der Gegenspannungskompensator 32 durch eine Reihenschaltung eines ohmschen Widerstands 35 und einem Aktivierungsschalter S3 mit einem der Reihenschaltung parallel geschalteten zusätzlichen Schalter S7 gebildet werden. Der Gegenspannungskompensator 32 wird durch Schließen des Aktivierungsschalters S3 aktiviert, wobei gleichzeitig mit dem zusätzlichen Schalter S7 eine ansonsten vorliegende direkte Verbindung zwischen den Anschlüssen 33, 34 des Gegenspannungskompensators 32 aufgetrennt wird. Durch komplementäres Schalten der Schalter S3 und S7 kann somit selektiv die Kompensationsspannung U_{K} an den Anschlüssen 33, 34 des Gegenspannungskompensators 32 hinzugeschaltet oder abgeschaltet werden. Die gewünschte Potentialverschiebung tritt aber erst mit einem tatsächlich durch den ohmschen Widerstand fließenden Strom ein. Nachteilig ist insbesondere, dass durch den ohmschen Widerstand zusätzliche Verluste auftreten. Vorteilhaft ist hingegen, dass die Polarität der Kompensationsspannung U_{K} mit der Richtung des Stromflusses durch den ohmschen Widerstand wechselt, so dass mit dieser Ausführungsform des Gegenspannungskompensators 32 erfindungsgemäße Polwender 8 mit nur einem einzigen Gegenspannungskompensator 32 realisiert werden können.

Anstelle des ohmschen Widerstands 35 in Fig. 2a kann bei einer weiteren Ausführungsform gemäß **Fig. 2b** eine Drossel 36 verwendet werden. Auch bei dieser Ausführungsform des Gegenspannungskompensators 32 tritt die gewünschte Potentialverschiebung erst mit einem tatsächlich durch die Drossel 36 fließenden Strom ein und es ergibt sich eine mit der Richtung des Stromflusses durch die Drossel 36 wechselnde Polarität der Kompensationsspannung U_{K}. Nachteilig ist jedoch, dass die an den Ausgangsanschlüssen 4, 10 auftretende Stromform des ausgegebenen Wechselstroms I_{AC} durch die Drossel 36 beeinflusst wird.

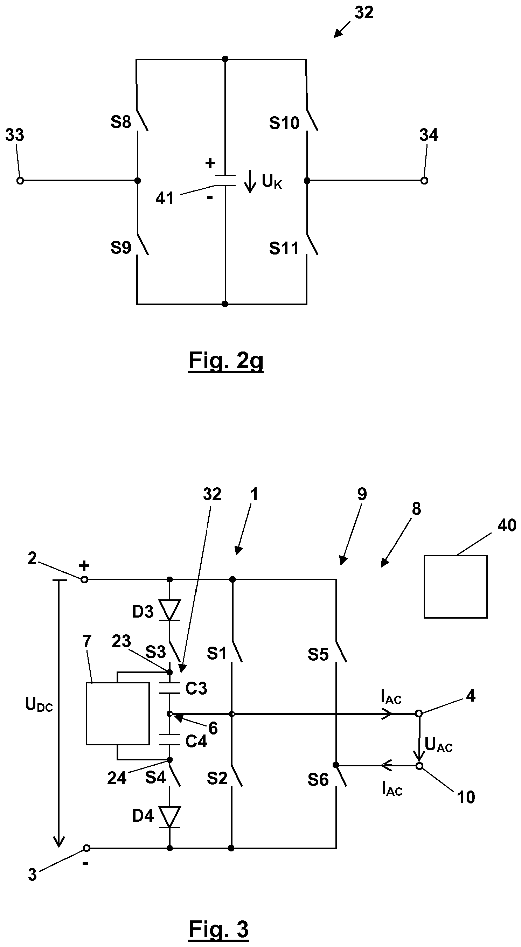

Bei der Ausführungsform des Gegenspannungskompensators 32 gemäß **Fig. 2c** wird die Kompensationsspannung U_{K} durch einen auf diese Spannung aufgeladenen Kondensator C3 bereitgestellt. Ein Aufladen des Kondensators C3 kann z. B. durch vorübergehendes Schließen des Schalters S3 in Verbindung mit den jeweils hiermit in Reihe liegenden Brückenschaltern bewirkt werden. Ein unkontrolliertes Entladen des Kondensators C3 wird durch eine in Reihe mit dem Kondensator C3 geschaltete Entladungssperrdiode D3 verhindert, wobei es insbesondere um ein Entladen über den geöffneten Aktivierungsschalter S3 geht, der typischerweise als Halbleiterschalter ausgebildet ist, welche im geöffneten Zustand nur unidirektional sperren. Bei geschlossenem Aktivierungsschalter S3, also bei aktivem Gegenspannungskompensator 32, wird der Kondensator C3 weiter über den gewünschten Wert der Kompensationsspannung U_{K} hinaus geladen. Um diese zusätzliche Ladung regelmäßig wieder zu entfernen, ist eine in Fig. 2c nicht ausdrücklich dargestellte Entladeschaltung vorgesehen, die ein kontrolliertes Entladen des Kondensators C3 ermöglicht. Vorteilhaft bei der Ausführungsform des Gegenspannungskompensators 32 gemäß Fig. 2 ist, dass die Kompensationsspannung U_{K} direkt bei Aktivierung des Gegenspannungskompensators 32 an den Anschlüssen 33, 34 ansteht und bei entsprechend großer Kapazität des Kondensators C3 während des aktivierten Zustands näherungsweise konstant ist.

**Fig. 2d** zeigt eine Ausführungsform des Gegenspannungskompensators 32 mit einer variablen Impedanz 37, die durch einen hier nicht dargestellten Steuereingang auf einen bestimmten Impedanzwert eingestellt werden kann. Beispielhafte praktische Realisierungen einer solchen variablen Impedanz 37 sind in **Fig. 2e** und **Fig. 2f** in Form von Halbleiterschaltern 38 dargestellt. Die Halbleiterschalter 38 können über Ihren Steueranschluss 39 auf eine zwischen den Anschlüssen 33, 34 abfallende Kompensationsspannung U_{K} angesteuert werden. Eine Aktivierung des Gegenspannungskompensators 32 durch die Schalteransteuerung 40 des Polwenders 8 erfolgt dann durch Ansteuerung der Halbleiterschalter 38 auf die gewünschte über ihnen abfallende Kompensationsspannung U_{K}. Somit sind hier vorteilhaft keine Aktivierungsschalter S3 und keine zusätzlichen Schalter S7, wie bei den Ausführungsformen des Gegenspannungskompensators 32 in den Fig. 2a-c, erforderlich. Weiterhin ergibt sich der Vorteil, dass die Kompensationsspannung U_{K} über den Steueranschluss beliebig eingestellt werden kann und auch im aktivierten Zustand jederzeit an eine aktuell vorliegende zu kompensierende Gegenspannung angepasst werden kann.

Bei der in **Fig. 2g** dargestellten Ausführungsform ist der Gegenspannungskompensator 32 durch eine aus den Aktivierungsschaltern S8, S9, S10 und S11 gebildete Vollbrückenschaltung ausgebildet, wodurch die an einem Kondensator 41 anliegende Kompensationsspannung U_{K} an den Anschlüssen 33 und 34 des Gegenspannungskompensators 32 durch Schließen der Aktivierungsschalter S8 und S11 mit positiver Polarität und bei Schließen der Aktivierungsschalter S9 und S10 mit negativer Polarität bereitgestellt wird. Diese Ausführungsform eignet sich besonders für einen erfindungsgemäßen Polwender mit nur einem einzigen Gegenspannungskompensator 32, wie er beispielsweise in Fig. 1d dargestellt ist. Durch gleichzeitiges Schließen der Aktivierungsschalter S8 und S10 oder S9 und S11 wird der Gegenspannungskompensator 32 deaktiviert. Darüber hinaus ist bei der Ausführungsform gemäß Fig. 2g keine Entladeschaltung für den Kondensator 41 erforderlich, da bei geschlossenen Aktivierungsschaltern S8 und S11 bzw. S9 und S10 in Fällen, in denen ein Stromfluss über den Gegenspannungskompensator 32 der Kompensationsspannung U_{K} entgegengerichtet ist, der Kondensator entladen wird. Ein gezieltes Laden oder Entladen des Kondensators 41 kann also durch eine entsprechende Ansteuerung der Aktivierungsschalter S8, S9, S10 und S11 erfolgen.

In **Fig. 3** ist eine konkrete Ausführungsform eines erfindungsgemäßen Polwenders 8 mit einer Anordnung von Gegenspannungskompensatoren 32 wie in Fig. 1b dargestellt, wobei die Gegenspannungskompensatoren 32 entsprechend der Ausführungsform gemäß Fig. 2c mit einem ersten Aktivierungsschalter S3, einem ersten Kondensator C3 und einer ersten Entladungssperrdiode D3 für den ersten Kondensator C3 sowie einem zweiten Aktivierungsschalter S4, einem zweiten Kondensator C4 und einer zweiten Entladungssperrdiode D4 für den Kondensator C4 ausgebildet sind. Die zusätzlichen Schalter der Gegenspannungskompensatoren 32 sind hier durch die Brückenschalter S1 bzw. S2 der Halbbrücke 1 gebildet. Die Kondensatoren C3 und C4 sind als erstes hinter einer Verzweigung 6 von dem Ausgangsanschluss 4 zu den beiden Eingangsanschlüssen 2 und 3 angeordnet. Zwischen dem jeweiligen Kondensator C3 bzw. C4 und dem zugehörigen Aktivierungsschalter S3 bzw. S4 ist eine Entladeschaltung 7 angeschlossen, mit der die beiden Kondensatoren C3 und C4 bei Bedarf entladen werden können. Ein unkontrolliertes Entladen der Kondensatoren C3 und C4 wird durch die Entladungssperrdioden D3 und D4 verhindert, wobei es wie schon erwähnt insbesondere um ein Entladen über die geöffneten Schalter S3 und S4 geht, die typischerweise als Halbleiterschalter ausgebildet sind, die im geöffneten Zustand nur unidirektional sperren.

Wenn die Kondensatoren C3 und C4 auf eine Kompensationsspannung mit den in Fig. 3 angedeuteten Polaritäten aufgeladen sind, was z. B. durch vorübergehendes Schließen der Schalter S3 und S4 bewirkt werden kann, führt beispielsweise ein Verbinden des Ausgangsanschlusses 4 mit dem Eingangsanschluss 2 über den Schalter S3 statt über den Schalter S1 dazu, dass das Potential des Eingangsanschlusses 2 gegenüber dem Ausgangsanschluss 4 um die über dem Kondensator C3 anliegende Kompensationsspannung verschoben wird. Auf diese Weise dienen die Kondensatoren C3 und C4 als Gegenspannungskompensator 32, der Gegenspannungen zwischen dem Ausgangsanschluss 4 und dem jeweiligen Eingangsanschluss 2, 3 kompensiert, die einem Stromfluss von dem jeweiligen Eingangsanschluss 2, 3 zu dem Ausgangsanschluss 4 entgegengerichtet sind.

Die Brückenschalter S1 bis S6 des Polwenders 8 werden von der Schalteransteuerung 40 so angesteuert, dass einer der beiden Schalter S1 und S3 zusammen mit dem Schalter S6 oder einer der beiden Schalter S2 und S4 zusammen mit dem Schalter S5 geschlossen wird. Durch einen Wechsel zwischen diesen beiden Formen der Verbindung der Ausgangsanschlüsse 4 und 10 mit den Eingangsanschlüssen 2 und 3 wird die Polarität der Eingangsanschlüsse 2 und 3 gegenüber den Ausgangsanschlüssen 4 und 10 umgekehrt. Soweit dabei statt des Schalters S1 der Schalter S3 bzw. statt des Schalters S2 der Schalter S4 geschlossen wird, erfolgt die bereits anhand von Fig. 1 erläuterte Potentialverschiebung der Gleichspannung U_{DC} zwischen den Eingangsanschlüssen 2 und 3 gegenüber der Wechselspannung U_{AC} zwischen den Ausgangsanschlüssen 4 und 10.

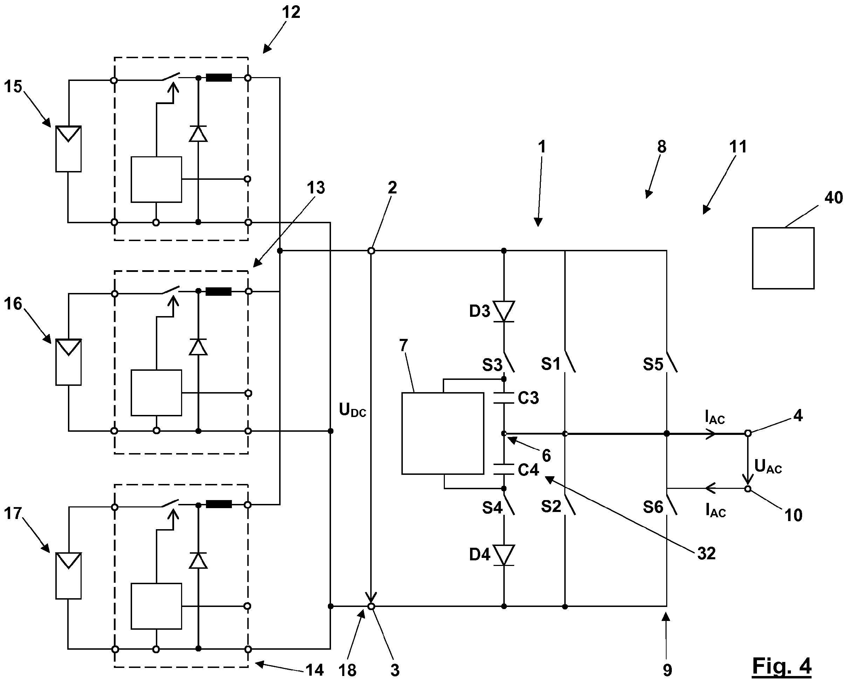

Der in **Fig. 4** dargestellte Wechselrichter 11 umfasst den Polwender 8 gemäß Fig. 3. An die Eingangsanschlüsse 2 und 3 sind dabei mehrere DC/DC-Wandler 12 bis 14 parallel zueinander angeschlossen, die hier jeweils als Tiefsetzsteller skizziert sind. Über die DC/DC-Wandler 12 bis 14 sind separate Photovoltaikgeneratoren 15 bis 17 an einen zwischen den Eingangsanschlüssen 2 und 3 gebildeten Gleichspannungszwischenkreis 18 angeschlossen. Dieser Gleichspannungszwischenkreis 18 kann ebenso wie die DC/DC-Wandler zusätzliche, nicht dargestellte Kondensatoren aufweisen. Die einzelnen DC/DC-Wandler sind einfache Einquadrantensteller, die synchron zueinander einen gepulsten Gleichstrom über den Gleichspannungszwischenkreis 18 abgeben. Die einzelnen DC/DC-Wandler 12 bis 14 werden dabei beispielsweise so angesteuert, dass sie einen Arbeitspunkt des jeweils angeschlossenen Photovoltaikgenerators 15 bis 17 im sogenannten MPP, dem Maximum Power Point, halten, um die von den Photovoltaikgeneratoren 15 bis 17 generierte Leistung zu maximieren. Der über den Gleichspannungszwischenkreis 18 fließende gepulste Gleichstrom wird von dem Polwender 8 zu einem Wechselstrom zwischen den Ausgangsanschlüssen 4 und 10 umgeformt, indem er nach jedem Puls, d. h. jeder Halbwelle des gepulsten Gleichstroms, die Polarität der Eingangsanschlüsse 2 und 3 gegenüber den Ausgangsanschlüssen 4 und 10 umdreht. So wird über den Polwender 8 ein Wechselstrom in ein an die Ausgangsanschlüsse 4 und 10 angeschlossenes Wechselstromnetz eingespeist.

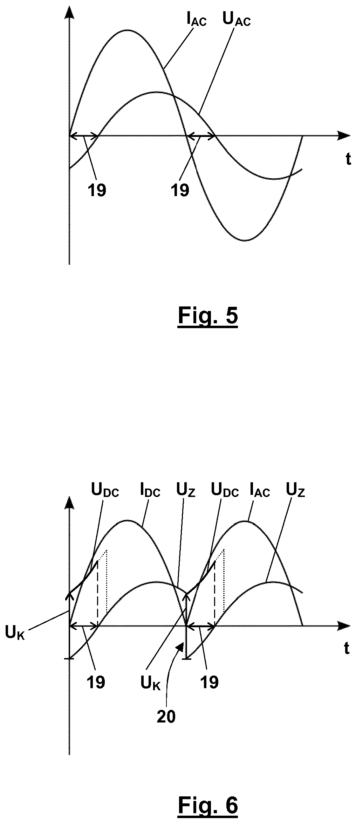

**Fig. 5** zeigt den Verlauf des Wechselstroms I_{AC} gegenüber dem Verlauf der Wechselspannung U_{AC} zwischen den Ausgangsanschlüssen 4 und 10 bei einer Phasenverschiebung mit der Wechselspannung U_{AC} voreilendem Wechselstrom I_{AC}. Aufgrund der Phasenverschiebung ergeben sich Zeiträume 19, in denen die Wechselspannung U_{AC} ein anderes Vorzeichen als der Wechselstrom I_{AC} zwischen den Ausgangsanschlüssen 4 und 10 hat. Ein Umkehren der Polarität der Ausgangsanschlüsse 4 und 10 gegenüber den Eingangsanschlüssen 2 und 3 in den Nulldurchgängen des Wechselstroms I_{AC}, das in **Fig. 6** skizziert ist, führt daher zwar ohne weiteres zu dem pulsierenden Gleichstrom I_{DC} über dem Gleichspannungszwischenkreis 18, aber grundsätzlich auch zu Spannungssprüngen 20 mit Wechsel des Vorzeichens bei der an dem Gleichspannungszwischenkreis 18 anliegenden Spannung U_{Z}, d. h. ohne Gegenmaßnahmen würde es sich nicht mehr um eine Gleichspannung handeln. Ausgeglichen wird dies, indem zumindest in den Zeiträumen 19 die Spannung U_{Z} um die Kompensationsspannung U_{K}, die an dem Kondensator C3 bzw. C4 anliegt, angehoben wird, so dass sich die Gleichspannung U_{DC} ohne Vorzeichenwechsel ergibt. Die Kompensationsspannung U_{K} kann auch noch länger als über die Zeiträume 19 aktiviert bleiben, damit die Gleichspannung U_{DC} anschließend nicht auf null, sondern auf einen über null liegenden Wert zurückgeht. Dies ist in Fig. 6 mit gepunkteten Linien angedeutet.

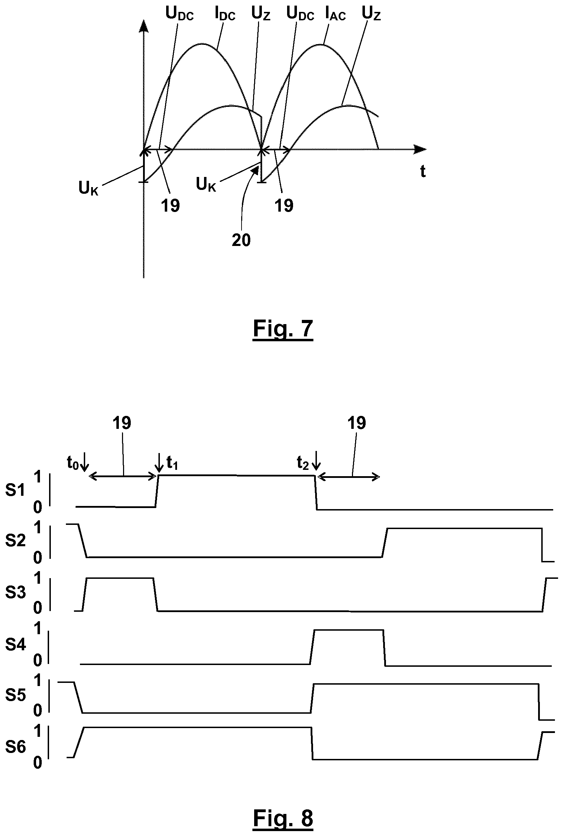

Wie im Zusammenhang mit den Ausführungen des Gegenspannungskompensators 32 als variable Impedanz gemäß den Fig. 2d-f erwähnt, ermöglichen es diese Ausführungsformen, die Kompensationsspannung U_{K} adaptiv an eine vorliegende Gegenspannung anzupassen. Dadurch kann, wie in **Fig. 7** dargestellt, in den Zeiträumen 19, in denen die Gegenspannung vorliegt, durch adaptive Anpassung der Kompensationsspannung U_{K} die resultierende am Gleichspannungszwischenkreis 18 anliegende Spannung U_{DC} auf einen gleichbleibenden Wert von null oder alternativ einen gleichbleibenden über null liegenden Wert gestellt werden.

**Fig. 8** illustriert die Ansteuerung der Schalter S1 bis S6 des Polwenders 8 des Wechselrichters 11 gemäß Fig. 4, um die Gleichspannung U_{DC} zwischen den Eingangsanschlüssen 2 und 3 gemäß Fig. 6 zu erreichen. Bei einem Nulldurchgang des Wechselstroms I_{AC} zum Zeitpunkt t₀ wird zunächst für den Zeitraum 19 neben dem Schalter S6 der Schalter S3 geschlossen. Nach dem Zeitraum 19 wird zum Zeitpunkt t₁ von dem Schalter S3 auf den Schalter S1, d. h. auf eine direkte Verbindung ohne Kompensationsspannung zwischen dem Ausgangsanschluss 4 und dem Eingangsanschluss 2, umgeschaltet. Zum Zeitpunkt t₂ nach einer Halbwelle des Wechselstroms I_{AC}, d. h. beim nächsten Nulldurchgang, werden die Schalter S1 und S6 geöffnet, und stattdessen wird der Schalter S5 zunächst zusammen mit dem Schalter S4 geschlossen. Nach dem Zeitraum 19 wird dann von dem Schalter S4 auf den Schalter S2 umgeschaltet. Eine Gleichspannung U_{DC} zwischen den Eingangsanschlüssen 2 und 3 gemäß Fig. 7 lässt sich ebenfalls durch eine Ansteuerung der Schalter S1 bis S6 des Polwenders 8 gemäß Fig. 8 erreichen, wobei in den Zeiträumen 19, in denen in Fig. 8 der Schalter S3 bzw. S4 eingeschaltet ist, der Gegenspannungskompensator 32 gemäß den Ausführungsformen in Fig. 2d-f adaptiv auf eine Kompensationsspannung U_{K} in Höhe der gerade vorliegenden Gegenspannung angesteuert wird. Die Anordnung der Gegenspannungskompensatoren 32 gemäß den Ausführungsformen in Fig. 2d-f ist dabei nicht auf eine bestimmte der im Zusammenhang mit den Fig. 1a-d beschriebenen Anordnungen beschränkt.

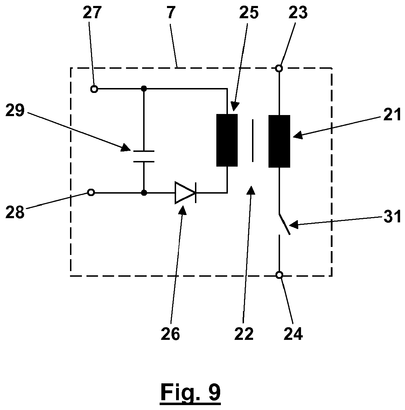

**Fig. 9** zeigt eine mögliche Ausführungsform der Entladeschaltung 7. Hierbei handelt es sich um einen Sperrwandler mit einem Schalter 31, der mit einer Primärwicklung 21 eines Transformators 22 zwischen Eingangsanschlüsse 23 und 24 der Entladeschaltung 7 in Reihe geschaltet ist. Eine Sekundärwicklung 25 des Transformators 22 ist mit einer Gleichrichterdiode 26 zwischen Ausgangsanschlüsse 27 und 28 des Sperrwandlers in Reihe geschaltet, zwischen denen ein Glättungskondensator 29 angeordnet ist. Der Sperrwandler gibt an den Ausgangsanschlüssen 27 und 28 einen Gleichstrom aus, der galvanisch getrennt von der Spannung zwischen den Eingangsanschlüssen 23 und 24 ist und mit dem z. B. der Gleichspannungszwischenkreis einer Bordnetzversorgung des Wechselrichters 11 oder ein eingangsseitiger Gleichspannungszwischenkreis eines der DC/DC-Wandler 12 bis 14 aufgeladen werden kann.

### BEZUGSZEICHENLISTE

- 1: Halbbrücke
- 2: Eingangsanschluss
- 3: Eingangsanschluss
- 4: Ausgangsanschluss
- 5: Bezugspunkt
- 6: Verzweigung
- 7: Entladeschaltung
- 8: Polwender
- 9: Halbbrücke
- 10: Ausgangsanschluss
- 11: Wechselrichter
- 12: DC/DC-Wandler
- 13: DC/DC-Wandler
- 14: DC/DC-Wandler
- 15: Photovoltaikgenerator
- 16: Photovoltaikgenerator
- 17: Photovoltaikgenerator
- 18: Gleichspannungszwischenkreis
- 19: Zeitraum
- 20: Spannungssprung
- 21: Primärwicklung
- 22: Transformator
- 23: Eingangsanschluss
- 24: Eingangsanschluss
- 25: Sekundärwicklung
- 26: Gleichrichterdiode
- 27: Ausgangsanschluss
- 28: Ausgangsanschluss
- 29: Kondensator
- 31: Schalter
- 32: Gegenspannungskompensator
- 33: Anschluss
- 34: Anschluss
- 35: Widerstand
- 36: Drossel
- 37: variable Impedanz
- 38: Halbleiterschalter
- 39: Steueranschluss
- 40: Schalteransteuerung
- 41: Kondensator
- S1: erster Brückenschalter
- S2: zweiter Brückenschalter
- S3: erster Aktivierungsschalter
- S4: zweiter Aktivierungsschalter
- S5: erster weiterer Brückenschalter
- S6: zweiter weiterer Brückenschalter
- S7: zusätzlicher Schalter
- S8: Aktivierungsschalter
- S9: Aktivierungsschalter
- S10: Aktivierungsschalter
- S11: Aktivierungsschalter
- C3: erster Kondensator
- C4: zweiter Kondensator
- D3: Entladungssperrdiode
- D4: Entladungssperrdiode
- U_{DC}: Gleichspannung
- U_{AC}: Wechselspannung
- U_{Z}: unkompensierte Zwischenkreisspannung
- U_{K}: Kompensationsspannung
- I_{DC}: pulsierender Gleichstrom
- I_{AC}: Wechselstrom
- t: Zeit
- t₀: Zeitpunkt
- t₁: Zeitpunkt
- t₂: Zeitpunkt

## Patentansprüche

1. Blindleistungsfähiger Polwender (8) mit
- einer Halbbrücke (1) mit einem ersten Eingangsanschluss (2), einem zweiten Eingangsanschluss (3), und einem Ausgangsanschluss (4), die einen zwischen den ersten Eingangsanschluss (2) und den Ausgangsanschluss (4) geschalteten ersten Brückenschalter (S1) und einen zwischen den zweiten Eingangsanschluss (3) und den Ausgangsanschluss (4) geschalteten zweiten Brückenschalter (S2) aufweist, und mit
- einer weiteren Halbbrücke (9), die einen zwischen den ersten Eingangsanschluss (2) und einen weiteren Ausgangsanschluss (10) geschalteten ersten weiteren Brückenschalter (S5) und einen zwischen den zweiten Eingangsanschluss (3) und den weiteren Ausgangsanschluss (10) geschalteten zweiten weiteren Brückenschalter (S6) aufweist,
- einer Schalteransteuerung (40) zur Ansteuerung der Brückenschalter (S1, S2, S5, S6), die derart ausgebildet ist, dass eine Verbindung der Ausgangsanschlüsse (4, 10) mit den Eingangsanschlüssen (2, 3) über die Brückenschalter (S1, S2, S5, S6) beim Nulldurchgang eines an den Ausgangsanschlüssen (4, 10) fließenden Wechselstroms (I_{AC}) gewechselt wird,
**dadurch gekennzeichnet, dass** in einem Strompfad zwischen den Eingangsanschlüssen (2, 3) über den ersten Brückenschalter (S1), die Ausgangsanschlüsse (4, 10) und den zweiten weiteren Brückenschalter (S6) und in einem Strompfad zwischen den Eingangsanschlüssen (2, 3) über den ersten weiteren Brückenschalter (S5), die Ausgangsanschlüsse (4, 10) und den zweiten Brückenschalter (S2) mindestens ein Gegenspannungskompensator (32) angeordnet ist, der dazu ausgebildet ist, dass er das elektrische Potential des jeweiligen Eingangsanschlusses (2, 3) gegenüber dem jeweiligen Ausgangsanschluss (4, 10), zwischen denen der Gegenspannungskompensator (32) angeordnet ist, selektiv in Zeiträumen unterschiedlichen Vorzeichens des Wechselstroms (I_{AC}) und einer Wechselspannung (U_{AC}) zwischen den Ausgangsanschlüssen (4, 10) um eine über dem Gegenspannungskompensator (32) abfallende Kompensationsspannung (Uₖ) verschiebt und dadurch eine dem Stromfluss in dem Strompfad, in dem der Gegenspannungskompensator (32) angeordnet ist, entgegengerichtete Gegenspannung kompensiert.

2. Blindleistungsfähiger Polwender (8) nach Anspruch 1, **dadurch gekennzeichnet, dass** der Gegenspannungskompensator (32) in Reihe mit einem der Brückenschalter (S1, S2, S5, S6) geschaltet ist, wobei der Gegenspannungskompensator (32) optional zwischen dem Brückenschalter (S1, S2, S5, S6) und dem jeweiligen Ausgangsanschluss (4, 10) angeordnet ist.

3. Blindleistungsfähiger Polwender (8) nach Anspruch 1 oder2, **dadurch gekennzeichnet, dass** der Gegenspannungskompensator (32) als variable Impedanz ausgebildet ist.

4. Blindleistungsfähiger Polwender (8) nach Anspruch 3, **dadurch gekennzeichnet, dass** die variable Impedanz als Halbleiterschalter im Linearbetrieb oder als Transistor, der auf einen über ihm auftretenden Spannungsabfall in Höhe der Kompensationsspannung (Uₖ) angesteuert wird, ausgebildet ist, wobei optional der Halbleiterschalter einen der Brückenschalter (S1, S2, S5, S6) umfasst.

5. Blindleistungsfähiger Polwender (8) nach Anspruch 1, **dadurch gekennzeichnet, dass** der Gegenspannungskompensator (32) eine Reihenschaltung aus einem ohmschen Widerstand oder einer Drossel und einem Aktivierungsschalter (S3, S4) umfasst, der ein zusätzlicher Schalter parallel geschaltet ist.

6. Blindleistungsfähiger Polwender (8) nach Anspruch 1, **dadurch gekennzeichnet, dass** der Gegenspannungskompensator (32) eine Reihenschaltung aus einem auf die Kompensationsspannung (Uₖ) aufladbaren Kondensator (C3, C4) und einem Aktivierungsschalter (S3, S4) umfasst, der ein zusätzlicher Schalter parallel geschaltet ist, wobei optional weiterhin zu dem Kondensator (C3, C4) eine Entladungssperrdiode (D3) in Reihe geschaltet ist, wobei optional eine Entladeschaltung (7) für den Kondensator (C3, C4) vorgesehen ist, wobei dann die Entladeschaltung (7) optional derart ausgebildet ist, dass sie regelmäßig bei geöffnetem Aktivierungsschalter (S3, S4) einen vorgegebenen Grundwert der Kompensationsspannung (U_{K}) einstellt.

7. Blindleistungsfähiger Polwender (8) nach Anspruch 5 oder 6, **dadurch gekennzeichnet, dass** der zusätzliche Schalter einen der Brückenschalter (S1, S2, S5, S6) umfasst.

8. Blindleistungsfähiger Polwender (8) nach Anspruch 1, **dadurch gekennzeichnet, dass** der Gegenspannungskompensator (32) eine Vollbrückenschaltung umfasst, an deren Eingangsanschlüssen ein Kondensator (41) angeschlossen ist und an deren Ausgangsanschlüssen die Kompensationsspannung bereitgestellt wird.

9. Wechselrichter (11) mit einem blindleistungsfähigen Polwender (8) nach einem der Ansprüche 1 bis 8.

10. Wechselrichter (11) mit
- mindestens einem eingangsseitigen DC/DC-Wandler (12 bis 14) zur Formung eines in Halbwellen pulsierenden Gleichstroms (I_{DC}) und
- einem ausgangsseitigen blindleistungsfähigen Polwender (8) nach einem der Ansprüche 1 bis 8 zum Ausgeben eines Wechselstroms (I_{AC}),
wobei der mindestens eine DC/DC-Wandler (12 bis 14) optional ein Einquadrantensteller ist.

11. Wechselrichter (11) nach Anspruch 10, **dadurch gekennzeichnet, dass** eingangsseitig mehrere DC/DC-Wandler (12 bis 14) mit ihren jeweiligen Ausgängen an einen gemeinsamen Gleichspannungszwischenkreis (18) angeschlossen sind, der mit dem ersten und dem zweiten Eingangsanschluss (2, 3) verbunden ist, wobei optional an jeden eingangsseitigen DC/DC-Wandler (12 bis 14) ein separater Photovoltaikgenerator (15 bis 17) angeschlossen ist, wobei dann der jeweilige DC/DC-Wandler (12 bis 14) so ausgebildet ist, dass er den Arbeitspunkt des an ihn angeschlossenen Photovoltaikgenerators (15 bis 17) vorgibt.

12. Polwendeverfahren zum wechselweisen Verbinden von zwei Polen eines Gleichspannungszwischenkreises (18) mit Ausgangsanschlüssen (4, 10) eines Wechselstromausgangs, an dem eine Wechselspannung (U_{AC}) anliegt, um über den Wechselstromausgang einen Wechselstrom (I_{AC}) mit einer Phasenverschiebung zu der Wechselspannung (U_{AC}) auszugeben, wobei die Verbindung der Ausgangsanschlüsse (4, 10) des Wechselstromausgangs mit den Polen des Gleichspannungszwischenkreises (18) beim Nulldurchgang des Wechselstroms (I_{AC}) gewechselt wird, **dadurch gekennzeichnet, dass** der Wechselstromausgang bei gleichen Vorzeichen des Wechselstroms (I_{AC}) und der Wechselspannung (U_{AC}) direkt mit dem Gleichspannungszwischenkreis verbunden wird, während er bei einander entgegengesetzten Vorzeichen des Wechselstroms (I_{AC}) und der Wechselspannung (U_{AC}) über einen Gegenspannungskompensator (32) mit dem Gleichspannungszwischenkreis (18) verbunden wird, der das elektrische Potential des Pols des Gleichspannungszwischenkreises (18) gegenüber dem Ausgangsanschluss (4, 10), mit dem der Pol über den Gegenspannungskompensator (32) verbunden ist, um eine über ihm abfallende Kompensationsspannung (Uₖ) verschiebt.

13. Polwendeverfahren nach Anspruch 12, **dadurch gekennzeichnet, dass** ein als variable Impedanz ausgebildeter Gegenspannungskompensator (32) auf einen über ihm auftretenden Spannungsabfall in Höhe einer Kompensationsspannung (Uₖ) angesteuert wird, wobei optional der über dem Gegenspannungskompensator (32) auftretende Spannungsabfall in Höhe einer Kompensationsspannung (Uₖ) adaptiv an eine zwischen einem der Pole des Gleichspannungszwischenkreises (18) und einem der Ausgangsanschlüsse (4, 10) anliegende Gegenspannung angepasst wird.

14. Polwendeverfahren nach Anspruch 12, **dadurch gekennzeichnet, dass** ein Kondensator (C3, C4) des Gegenspannungskompensators (32) auf eine Kompensationsspannung (U_{K}) geladen wird.

15. Polwendeverfahren nach Anspruch 14, **dadurch gekennzeichnet, dass** ein erster Kondensator (C3) des Gegenspannungskompensators (32) auf eine erste Kompensationsspannung (U_{K}) zwischen dem einen Pol des Gleichspannungszwischenkreises (18) und einem der Ausgangsanschlüsse (4) des Wechselstromausgangs geladen wird, und ein zweiter Kondensator (C4) des Gegenspannungskompensators (32) auf eine zweite Kompensationsspannung (U_{K}) zwischen dem anderen Pol des Gleichspannungszwischenkreises (18) und dem einen der Ausgangsanschlüsse (4) des Wechselstromausgangs geladen wird, wobei optional die Kondensatoren (C3, C4), wenn sie nicht mit dem Gleichspannungszwischenkreis (18) verbunden sind, regelmäßig auf einen vorgegebenen Grundwert der ersten und der zweiten Kompensationsspannung (U_{K}) entladen werden.

## Claims

1. An unfolding bridge (8) having reactive power capability with
- a half-bridge (1) with a first input terminal (2), a second input terminal (3), and an output terminal (4), comprising a first bridge switch (S1) connected between the first input terminal (2) and the output terminal (4) and a second bridge switch (S2) connected between the second input terminal (3) and the output terminal (4), and with
- a further half-bridge (9) comprising a first further bridge switch (S5) connected between the first input terminal (2) and a further output terminal (10) and a second further bridge switch (S6) connected between the second input terminal (3) and the further output terminal (10),
- a switch controller (40) for operation of the bridge switches (S1, S2, S5, S6) configured to reverse a connection of the output terminals (4, 10) with the input terminals (2, 3) via the bridge switches (S1, S2, S5, S6) at a zero crossing of an alternating current (I_{AC}) flowing at the output terminals (4, 10),
**characterized in that** in a current path between the input terminals (2, 3) via the first bridge switch (S1), the output terminals (4, 10), and the second further bridge switch (S6), and in a current path between the input terminals (2, 3), via the first further bridge switch (S5), the output terminals (4, 10), and the second bridge switch (S2), at least one reverse voltage compensator (32) is arranged configured to selectively shift in periods of time where the arithmetic sign of the alternating current and an alternating voltage between the output terminals differ the electrical potential of the respective input terminal (2, 3) with respect to the respective output terminal (4, 10) between which the reverse voltage compensator (32) is arranged by a compensation voltage (Uₖ) that is dropped across the reverse voltage compensator (32), and thereby compensates for a reverse voltage being opposite to the flow of current in the current path in which the reverse voltage compensator (32) is arranged.

2. The unfolding bridge (8) having reactive power capability as claimed in claim 1, **characterized in that** the reverse voltage compensator (32) is connected in series with one of the bridge switches (S1, S2, S5, S6), wherein the reverse voltage compensator (32) optionally is arranged between the bridge switches (S1, S2, S5, S6) and the respective output terminal (4, 10).

3. The unfolding bridge (8) having reactive power capability as claimed in claim 1 or 2, **characterized in that** the reverse voltage compensator (32) is configured as a variable impedance.

4. The unfolding bridge (8) having reactive power capability as claimed in claim 3, **characterized in that** the variable impedance is provided as a semiconductor switch operating in linear mode, or as a transistor driven to a voltage drop occurring across it having the magnitude of the compensation voltage (Uₖ), wherein optionally the semiconductor switch comprises one of the bridge switches (S1, S2, S5, S6).

5. The unfolding bridge (8) having reactive power capability as claimed in claim 1, **characterized in that** the reverse voltage compensator (32) comprises a series circuit of an ohmic resistor or of a choke and an activation switch (S3, S4), wherein an additional switch is connected in parallel to the series circuit.

6. The unfolding bridge (8) having reactive power capability as claimed in claim 1, **characterized in that** the reverse voltage compensator (32) comprises a series circuit of a capacitor (C3, C4) chargeable to the compensation voltage (Uₖ) and an activation switch (S3, S4), an additional switch being connected in parallel to the series circuit, wherein optionally a discharge blocking diode (D3) is connected in series with the capacitor (C3, C4), wherein optionally a discharge circuit (7) is provided for the capacitor (C3, C4), wherein the discharge circuit (7) is then optionally designed such that it regularly establishes a predefined base value of the compensation voltage (U_{K}) when the activation switch (S3, S4) is open.

7. The unfolding bridge (8) having reactive power capability as claimed claim 5 or 6, **characterized in that** the additional switch comprises one of the bridge switches (S1, S2, S5, S6).

8. The unfolding bridge (8) having reactive power capability as claimed in claim 1, **characterized in that** the reverse voltage compensator (32) comprises a full-bridge circuit, a capacitor (41) being connected to the input terminals of the full bridge circuit, and the compensation voltage being provided at the output terminals of the full bridge circuit.

9. An inverter (11) with an unfolding bridge (8) having reactive power capability as claimed in one of claims 1 to 8.

10. An inverter (11) with
- at least one input-side DC/DC converter (12 to 14) for forming a direct current (I_{DC}) pulsed in half-waves, and
- an output-side unfolding bridge (8) having reactive power capability as claimed in one of claims 1 to 8 for outputting an alternating current (I_{AC}), wherein the at least one DC/DC converter (12 to 14) optionally is a single-quadrant converter.

11. The inverter (11) as claimed in claim 10, **characterized in that** at the input side a plurality of DC/DC converters (12 to 14) are connected with their respective outputs to a common DC link circuit (18) connected to the first and the second input terminal (2, 3), wherein optionally a separate photovoltaic generator (15 to 17) is connected to each input-side DC/DC converter (12 to 14), wherein the respective DC/DC converter (12 to 14) is then configured to specify the working point of the photovoltaic generator (15 to 17) connected to it.

12. A polarity-reversing method for the alternating connection of two poles of a DC link circuit (18) with output terminals (4, 10) of an AC output at which an alternating voltage (U_{AC}) is present, in order to output an alternating current (I_{AC}) with a phase shift with respect to the alternating voltage (U_{AC}) via the AC output, wherein the connection of the output terminals (4, 10) of the AC output with the poles of the DC link circuit (18) is reversed at the zero crossing of the alternating current (I_{AC}), **characterized in that** when the alternating current (I_{AC}) and the alternating voltage (U_{AC}) have the same arithmetic sign, the AC output is directly connected with the DC link circuit, whereas when the arithmetic signs of the alternating current (I_{AC}) and the alternating voltage (U_{AC}) are opposite to one another, it is connected to the DC link circuit (18) via a reverse voltage compensator (32) shifting the electrical potential of the pole of the DC link circuit (18) with respect to the output terminal (4, 10) with which the pole is connected via the reverse voltage compensator (32) by a compensation voltage (Uₖ) dropped across it.

13. The polarity-reversing method as claimed in claim 12, **characterized in that** a reverse voltage compensator (32) formed as a variable impedance is driven to a voltage drop occurring across it having the magnitude of a compensation voltage (Uₖ), wherein optionally the voltage drop arising across the reverse voltage compensator (32) having the magnitude of a compensating voltage (Uₖ) is adaptively adjusted to a reverse voltage present between one of the poles of the DC link circuit (18) and one of the output terminals (4, 10).

14. The polarity-reversing method as claimed in claim 12, **characterized in that** a capacitor (C3, C4) of the reverse voltage compensator (32) is charged up to a compensation voltage (U_{K}).

15. The polarity-reversing method as claimed in claim 14, **characterized in that** a first capacitor (C3) of the reverse voltage compensator (32) is charged to a first compensation voltage (U_{K}) between the one pole of the DC link circuit (18) and one of the output terminals (4) of the AC output, and a second capacitor (C4) of the reverse voltage compensator (32) is charged to a second compensation voltage (U_{K}) between the other pole of the DC link circuit (18) and the one of the output terminals (4) of the AC output, wherein optionally the capacitors (C3, C4) are regularly discharged to a predetermined base value of the first and of the second compensation voltage (U_{K}) when they are not connected to the DC link circuit (18).

## Revendications

1. Inverseur de polarité de la puissance réactive (8) avec
- un demi-pont (1) avec une première borne d'entrée (2), une deuxième borne d'entrée (3) et une borne de sortie (4), qui présente un premier commutateur de pont (S1) connecté entre la première borne d'entrée (2) et la borne de sortie (4) et un deuxième commutateur de pont (S2) connecté entre la deuxième borne d'entrée (3) et la borne de sortie (4), et avec
- un autre demi-pont (9) comprenant un premier autre commutateur de pont (S5) connecté entre la première borne d'entrée (2) et une autre borne de sortie (10) et un second autre commutateur de pont (S6) connecté entre la seconde borne d'entrée (3) et l'autre borne de sortie (10),
- une commande de commutation (40) pour la commande des commutateurs de pont (S1,S2, S5, S6), qui est conçue de telle sorte qu'une connexion des bornes de sortie (4, 10) aux bornes d'entrée (2, 3) par l'intermédiaire des commutateurs de pont (S1, S2, S5, S6) est modifiée au passage par zéro d'un courant alternatif (I_{AC}) circulant sur les bornes de sortie (4,10),
**caractérisé en ce qu'**au moins un compensateur de contre-tension (32) est disposé dans un trajet de courant entre les bornes d'entrée (2, 3) par l'intermédiaire du premier commutateur de pont (S1), des bornes de sortie (4, 10) et du deuxième autre commutateur de pont (S6) et au moins un compensateur de contre-tension (32) est disposé dans un trajet de courant entre les bornes d'entrée (2, 3) par l'intermédiaire du premier autre commutateur de pont (S5), des bornes de sortie (4, 10) et du deuxième commutateur de pont (S2), lequel compensateur de contre-tension est conçu pour compenser le potentiel électrique de la borne d'entrée (2) respective, 3) par rapport à la borne de sortie respective (4, 10) entre laquelle est disposé le compensateur de contre-tension (32), décale sélectivement le courant alternatif (I_{AC}) et une tension alternative (U_{AC}) entre les bornes de sortie (4, 10) d'une tension de compensation (U_{K}) tombant aux bornes du compensateur de contre-tension (32) dans des périodes de signes différents, compensant ainsi une contre-tension opposée au flux de courant dans le trajet de courant dans lequel est disposé le compensateur de contre-tension (32).

2. Inverseur de polarité de la puissance réactive (8) selon la revendication 1, **caractérisé en ce que** le compensateur de contre-tension (32) est monté en série avec l'un des commutateurs de pont (S1, S2, S5, S6), le compensateur de contre-tension (32) étant disposé au choix entre le commutateur de pont (S1, S2, S5, S6) et la borne de sortie respective (4, 10).

3. Inverseur de polarité de la puissance réactive (8) selon la revendication 1 ou 2, **caractérisé en ce que** le compensateur de contre-tension (32) est conçu comme une impédance variable.

4. Inverseur de polarité de la puissance réactive (8) selon la revendication 3, **caractérisé en ce que** l'impédance variable est conçue comme un commutateur à semi-conducteur enfonctionnement linéaire ou comme un transistor qui est commandé en réponse à une chute de tension se produisant à ses bornes au niveau de la tension de compensation (U_{K}), le commutateur à semi-conducteur comprenant éventuellement l'un des commutateurs de pont (S1, S2, S5, S6).

5. Inverseur de polarité de la puissance réactive (8) selon la revendication 1, **caractérisé en ce que** le compensateur de contre-tension (32) comprend un montage en série d'une résistance ohmique ou d'une bobine et d'un commutateur d'activation (S3, S4) auquel un commutateur supplémentaire est connecté en parallèle.

6. Inverseur de polarité de la puissance réactive (8) selon la revendication 1, **caractérisé en ce que** le compensateur de contre-tension (32) comprend un montage en série d'un condensateur (C3, C4) qui peut être chargé à la tension de compensation (U_{K}) et un commutateur d'activation (S3, S4), auquel un commutateur supplémentaire est connecté en parallèle, dans lequel, en outre, une diode de blocage de décharge (D3) est éventuellement montée en série avec le condensateur (C3, C4), dans lequel un circuit de décharge (7) est éventuellement prévu pour le condensateur (C3, C4), dans lequel le circuit de décharge (7) est alors éventuellement conçu de telle sorte qu'il règle régulièrement une valeur de base prédéterminée de la tension de compensation (U_{K}) lorsque le commutateur d'activation (S3, S4) est ouvert.

7. Inverseur de polarité de la puissance réactive (8) selon la revendication 5 ou 6, **caractérisé en ce que** le commutateur supplémentaire comprend un des commutateurs de pont (S1, S2, S5,S6).

8. Inverseur de polarité de la puissance réactive (8) selon la revendication 1, **caractérisé en ce que** le compensateur de contre-tension (32) comprend un circuit en pont complet, aux bornes d'entrée duquel est connecté un condensateur (41) et aux bornes de sortie duquel est fournie la tension de compensation (U_{K}).

9. Onduleur (11) avec un inverseur de polarité de la puissance réactive (8) selon l'une des revendications 1 à 8.

10. Onduleur (11) avec
- au moins un convertisseur CC/CC (12 à 14) du côté de l'entrée pour former un courant continu (I_{DC}) pulsant en demi-ondes, et
- un inverseur de polarité de la puissance réactive (8) côté sortie selon l'une des revendications 1 à 8 pour la sortie d'un courant alternatif (I_{AC}),
dans lequel au moins un convertisseur CC/CC (12 à 14) est en option un convertisseur à un quadrant.

11. Onduleur (11) selon la revendication 10, **caractérisé en ce qu'**une pluralité de convertisseurs CC/CC (12 à 14) sont connectés du côté entrée avec leurs sorties respectives à un circuit intermédiaire en courant continu (18) qui est connecté aux première et deuxième bornes d'entrée (2, 3), dans lequel un générateur photovoltaïque séparé (15 à 17) est raccordé en option à chaque convertisseur CC/CC (12 à 14) côté entrée, le convertisseur CC/CC respectif (12 à 14) étant alors conçu de telle sorte qu'il prédétermine le point de fonctionnement du générateur photovoltaïque (15 à 17) qui lui est raccordé

12. Procédé d'inversion de pôles pour relier alternativement deux pôles d'un circuit intermédiaire en courant continu (18) à des bornes de sortie (4, 10) d'une sortie de courant alternatif à laquelle est appliquée une tension alternative (U_{AC}) afin de délivrer un courant alternatif (I_{AC}) avec un déphasage par rapport à la tension alternative (U_{AC}) par l'intermédiaire de la sortie de courant alternatif, la connexion des bornes de sortie (4, 10) de la sortie de courant alternatif aux pôles du circuit intermédiaire en courant continu (18) étant modifiée au passage par zéro du courant alternatif (I_{AC}), **caractérisé en ce que** la sortie de courant alternatif est connectée directement au circuit intermédiaire en courant continu lorsque le courant alternatif (I_{AC}) et la tension alternative (U_{AC}) ont le même signe, tandis qu'elle est connectée au circuit intermédiaire en courant continu (18) via un compensateur de contre-tension (32) lorsque le courant alternatif (I_{AC}) et la tension alternative (U_{AC}) ont des signes opposés, qui décale le potentiel électrique du pôle du circuit intermédiaire en courant continu (18) par rapport à la borne de sortie (4, 10) à laquelle le pôle est relié via le compensateur de contre-tension (32) par une tension de compensation (UK) qui chute aux bornes de celui-ci.

13. Procédé d'inversion de pôles selon la revendication 12, **caractérisé en ce qu'**un compensateur de contre-tension (32) conçu comme une impédance variable est commandé à une chute de tension se produisant à ses bornes au niveau d'une tension de compensation (U_{K}), dans lequel, éventuellement, la chute de tension se produisant aux bornes du compensateur de contre-tension (32) au niveau d'une tension de compensation (U_{K}) est adaptée de manière adaptative à une contre-tension appliquée entre l'un des pôles du circuit intermédiaire en courant continu (18) et l'une des bornes de sortie (4, 10).

14. Procédé d'inversion des pôles selon la revendication 12, **caractérisé en ce qu'**un condensateur (C3, C4) du compensateur de contre-tension (32) est chargé à une tension de compensation (U_{K}).

15. Procédé d'inversion de pôles selon la revendication 14, **caractérisé en ce qu'**un premier condensateur (C3) du compensateur de contre-tension (32) est chargé à une première tension de compensation (U_{K}) entre un pôle du circuit intermédiaire en courant continu (18) et une des bornes de sortie (4) de la sortie à courant alternatif, et un second condensateur (C4) dudit compensateur de contre-tension (32) est chargé à une seconde tension de compensation (U_{K}) entre l'autre pôle dudit circuit intermédiaire en courant continu (18) et ladite une desdites bornes de sortie (4) de ladite sortie à courant alternatif, dans lequel, en option, lesdits condensateurs (C3, C4), lorsqu'ils ne sont pas connectés audit circuit intermédiaire à courant continu (18), sont régulièrement déchargés à une valeur de base prédéterminée desdites première et seconde tensions de compensation (U_{K}).
